# EUROPÄISCHE PATENTANMELDUNG

(11) **EP 1 136 959 A1**
(43) Veröffentlichungstag der Anmeldung: **26.09.2001**
(21) Anmeldenummer: 01107024.0
(22) Anmeldetag: 21.03.2001
(51) Int. Cl.: G07F 7/02

(54) **Einrichtung zum Verkauf von Speisen und/oder Getränken**

(30) Priorität: 23.03.2000 AT 4952000
(71) Anmelder: Deutinger, Kornel, 5710 Kaprun (AT)
(72) Erfinder: Deutinger, Kornel, 5710 Kaprun (AT)
(74) Vertreter: Torggler, Paul Norbert, Dr.

(57) **Zusammenfassung**

Einrichtung zum Verkauf von Speisen und/oder Getränken und dergleichen, die sich bei Aufstiegshilfen insbesondere für Wintersportler wie beispielsweise Gondelbahnen oder Sesselliften befindet, wobei sie zumindest eine erste Station (5), an der die Bestellung aufgegeben wird, und eine zweite, von der ersten räumlich getrennten Station (7), in der die Speisen und/oder Getränke ausgegeben werden, umfaßt und die Stationen (5, 7) über eine Einrichtung zum Datenaustausch (6) miteinander verbunden sind.

## Beschreibung

Die Erfindung betrifft eine Einrichtung zum Verkauf von Speisen und/oder Getränken und dergleichen, die sich bei Aufstiegshilfen insbesondere für Wintersportler, wie beispielsweise Gondelbahnen oder Sesselliften befindet.

Derartige Einrichtungen sind in Form von Skihütten, Restaurants und Schutzhäusern bereits bekannt. Als nachteilig hat sich aber erwiesen, daß derartige Einrichtungen meistens örtlich getrennt von den Aufstiegshilfen für die Wintersportler angesiedelt sind, und daher die Inanspruchnahme dieser Einrichtungen stets mit einem relativ großen Zeitaufwand, der für die Anfahrt, das Ab- und Anschnallen der Schier, die Wartezeit zwischen Bestellung und Ausgabe sowie dem Verzehr der Speisen und Getränke notwendig ist, verbunden ist.

Aufgabe der Erfindung ist es, eine neuartige Einrichtung zum Verkauf von Speisen und/oder Getränken anzugeben, die es den Konsumenten erlaubt, Speisen und Getränke bequem und ohne größeren Zeitverlust zu kaufen und zu konsumieren.

Erfindungsgemäß wird dies dadurch erreicht, daß die Einrichtung zum Verkauf von Speisen und/oder Getränken zumindest eine erste Station, an der die Bestellung aufgegeben wird, und eine zweite, von der ersten räumlich getrennten Station, in der die Speisen und/oder Getränke ausgegeben werden, umfaßt und die Stationen über eine Einrichtung zum Datenaustausch miteinander verbunden sind.

Die Grundidee der Erfindung liegt darin, die Aufenthaltsdauer des Benützers zwischen dem Zugangsbereich zur und dem Verlassen der Aufstiegshilfe für die Bestellung, die Bereitstellung und den Verzehr der Speisen und/oder Getränke zu nutzen, wobei die räumliche Anordnung der Bestell- und Ausgabestation im Allgemeinen an den Stellen erfolgen wird, die von den Benutzern der Aufstiegshilfe immer geordnet passiert werden müssen, wie beispielsweise die Zutrittskontrolle zur Aufstiegshilfe oder der Einstiegsbereich in die Transportelemente der Aufstiegshilfe.

Zur Anpassung an die örtlichen Gegebenheiten und in Abhängigkeit davon, wie schnell die Strecke zwischen der Zutrittskontrolle zur Aufstiegshilfe und dem Einstiegsbereich für die Transportelemente zurückgelegt wird und ob der Benutzer seine Hände frei hat oder beispielsweise sein Sportgerät tragen muß, können die in den Unteransprüchen 2 bis 12 beanspruchten Ausführungsbeispiele vorgesehen sein, wobei es sich als besonders günstig erwiesen hat, wenn sich die erste Station zur Bestellungsaufgabe vor der Zugangskontrolle zur Aufstiegshilfe und die zweite Station zur Ausgabe der Speisen und/oder Getränke im Einstiegsbereich für die Transportelemente der Aufstiegshilfe befindet.

Bei einer derartigen Anordnung reicht die Zeit, die der Benützer für das Zurücklegen der Strecke zwischen der Bestell- und Ausgabestationen benötigt, zum Bereitstellen der bestellten Speisen und/oder Getränke aus, sodaß gemäß einem bevorzugten Ausführungsbeispiel vorgesehen sein kann, daß sich die erste Station zur Aufgabe der Bestellung und die zweite Station zur Ausgabe der Speisen und/oder Getränke im Bereich einer Station der Aufstiegshilfe befinden. Bei einer kurzen Aufenthaltsdauer in einer Station der Aufstiegshilfe, wie dies beispielsweise bei Sesselliften der Fall sein kann, oder wenn sich die erste Station zur Bestellungsaufgabe gemäß einem weiteren Aspekt der Erfindung nach der Zutrittskontrolle zur Aufstiegshilfe befindet, sieht eine weitere Ausführungsform der Erfindung vor, daß sich die erste Station zur Aufgabe der Bestellung und die zweite Station zur Ausgabe der Speisen und/oder Getränke in gesonderten Stationen der Aufstiegshilfe befinden, wodurch, bedingt durch die zwischen der Bestellung und der Ausgabe vergrößerte Zeitspanne, die Verfügbarkeit der bestellten Speisen und/oder Getränke sicher gestellt werden kann.

Gemäß einem weiteren Aspekt der Erfindung hat es sich als besonders vorteilhaft erwiesen, wenn die Transportelemente vom Förderseil entkuppelbare Seilklemmen aufweisen und insbesondere im Bereich der zweiten Station zur Ausgabe der Speisen und/oder Getränke in entkuppeltem Zustand langsam fahren oder stehen. Dadurch kann die Fahrtgeschwindigkeit der Transportelemente einerseits an die für die Bereitstellung der bestellten Speisen und/oder Getränke benötigte Zeit angepaßt werden und andererseits eine geordnete Ausgabe der Speisen und/oder Getränke sichergestellt werden.

Zur Gewährleistung eines kontinuierlichen Ablaufes und zur Vermeidung von Warteschlangen kann weiters vorgesehen sein, daß alle Stationen der Einrichtung über zumindest eine Einrichtung zum Datenaustausch miteinander verbunden sind. Der Wintersportler muß also nicht am Ort der Bestellung auf die Ausgabe der Speisen und/oder Getränke warten, vielmehr erfolgt die Ausgabe der bestellten Waren vorzugsweise nachdem er seinen Platz in/auf dem Transportelement der Aufstiegshilfe eingenommen hat. Als besonders vorteilhaft hat sich eine derartige Einrichtung zum Datenaustausch für den Fall erwiesen, daß gemäß einem weiteren Ausführungsbeispiel zumindest ein Teil der Speisen und/oder Getränke zubereitet und im Bereich der zweiten Station zur Ausgabe der Speisen und/oder Getränke ausgegeben wird, wobei die Einrichtung zum Verkauf von Speisen und/oder Getränken günstigerweise eine gesonderte dritte Station zur Zubereitung der Speisen und/oder Getränke aufweist. Die räumliche Anordnung einer derartigen dritten Station wird ebenso wie die Anordnung einer gemäß einer weiteren Variante der Erfindung vorgesehenen Zahleinrichtung von den örtlichen Gegebenheiten abhängen.

Nachstehen werden weitere Einzelheiten und Vorteile der zu recherchierenden Neuheit unter Bezugnahme auf die Zeichnung beschrieben.

Darin zeigt:
- Fig. 1: eine skizzenhafte Darstellung einer Station einer Aufstiegshilfe mit einer erfindungsgemäßen Einrichtung zum Verkauf von Speisen und/oder Getränken
- Fig. 2: eine schematische Darstellung einer weiteren Ausführungsform der Erfindung.

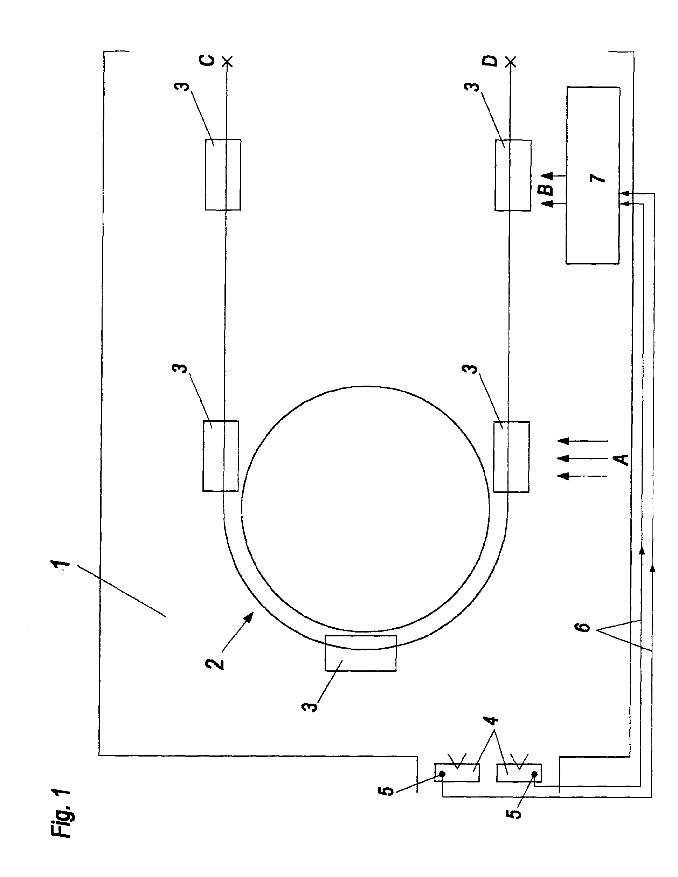

In der in Fig. 1 dargestellten Station 1 einer Aufstiegshilfe 2, die Transportelemente 3 mit vom Förderseil entkoppelbaren Seilklemmen aufweist, ist eine Zutrittskontrolle in Form von Drehkreuzen 4 angeordnet. Bei diesen Drehkreuzen 4 ist erste Station zur Bestellungsaufgabe 5 angeordnet. Die Bestellung wird über eine Leitung 6 zur zweiten Station zur Ausgabe der Speisen und/oder Getränke 7, die sich nach dem Einstiegsbereich A für die Transportelemente 3 der Aufstiegshilfe 2 befindet, weitergeleitet und in dieser zur Ausgabe bereit gehalten. Nachdem ein Benutzer seine Bestellung aufgegeben hat, geht er zum Einstiegsbereich A der Transportelemente 3, nimmt seinen Platz in/auf dem Transportelement 3 der Aufstiegshilfe 2 ein und verstaut seine Ausrüstungsgegenstände. Während das im Bereich C bis D entkoppelte Transportelement 3 der Aufstiegshilfe 4 langsam am Ausgabebereich B der Ausgabestation 7 vorbei fährt, erhält der Benutzer die bestellten Speisen und/oder Getränke und kann die gekauften Speisen in Ruhe während der Aufenthaltsdauer in/auf dem Transportelement 3 verzehren. Neben der durch den Zeitgewinn intensiveren Nutzungsmöglichkeit der Liftkarte, hat sich der Umstand, daß der Wintersportler sein Sportgerät im Gegensatz zu den herkömmlichen Verkaufseinrichtungen immer bei sich hat, als wirksame Diebstahlsicherung herausgestellt.

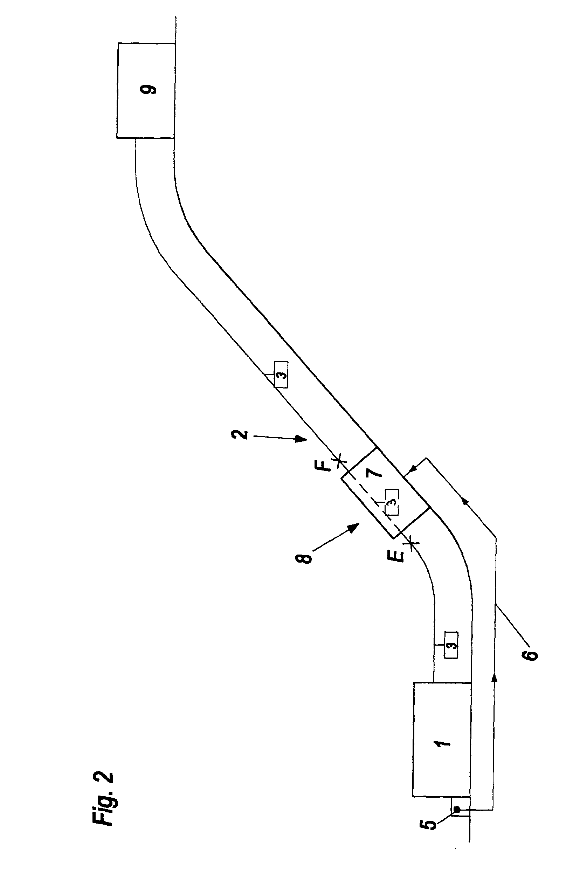

Bei der in Fig. 2 gezeigten Ausführungsform der Erfindung befindet sich die Bestellstation 5 wiederum bei der Zutrittskontrolle zur Station 1 der Aufstiegshilfe 2. Die Bestellung wird über eine Leitung 6 zur Ausgabestation 7, die sich in einer für den Einstieg in die Transportelemente 3 der Aufstiegshilfe 2 nicht ausgebildeten Station 8 befindet, weitergeleitet und in dieser zur Ausgabe bereit gehalten. Nachdem der Benutzer im Transportelement 3 der Aufstiegshilfe 2 Platz genommen hat, verläßt dieses die Station 1 und fährt im an das Förderseil gekoppelten Zustand zur Ausgabestation 7, wo es im Bereich zwischen E und F wiederum entkoppelt wird und langsam am nicht dargestellten Ausgabebereich der Ausgabestelle 7 vorbei fährt. Nachdem das Transportelement 3 den Punkt F passiert hat, fährt es in gekoppeltem Zustand bis zur Endstation 9 der Aufstiegshilfe 2.

Es versteht sich von selbst, daß die gezeigten Ausführungsformen nur beispielhaften Charakter haben und die Erfindung daher nicht auf diese Ausführungsvarianten beschränkt ist. Vielmehr sind alle zur Anpassung an die örtlichen Gegebenheiten notwendigen Ausführungsvarianten denkbar. So kann die erste Station zur Bestellungsaufgabe beispielsweise nach der Zutrittskontrolle zur Station der Aufstiegshilfe, aber vor beziehungsweise bei dem Einstiegsbereich in die Transportelemente angeordnet sein. Auch eine Anordnung derselben im Transportelement sollte ebenso wie die Positionierung der Ausgabestation noch vor dem Einstiegsbereich für die Transportelemente möglich sein. Hinsichtlich der zur Anwendung gelangenden Zahleinrichtung wird die erfindungsgemäße Einrichtung in keiner Weise eingeschränkt, sodaß von der Bezahlung mit Bargeld über den bargeldlosen Zahlungsverkehr bis hin zum berührungslosen Zahlungsverkehr alle bekannten Zahlungsweisen denkbar sind.

## Patentansprüche

1. Einrichtung zum Verkauf von Speisen und/oder Getränken und dergleichen, die sich bei Aufstiegshilfen insbesondere für Wintersportler wie beispielsweise Gondelbahnen oder Sesselliften befindet, **dadurch gekennzeichnet, daß** sie zumindest eine erste Station (5), an der die Bestellung aufgegeben wird, und eine zweite, von der ersten räumlich getrennten Station (7), in der die Speisen und/oder Getränke ausgegeben werden, umfaßt und die Stationen (5, 7) über eine Einrichtung zum Datenaustausch (6) miteinander verbunden sind.

2. Einrichtung nach Anspruch 1, **dadurch gekennzeichnet, daß** sich die erste Station (5) zur Bestellungsaufgabe vor der Zutrittskontrolle (4) zur Aufstiegshilfe (2) befindet.

3. Einrichtung nach Anspruch 1, **dadurch gekennzeichnet, daß** sich die erste Station (5) zur Bestellungsaufgabe bei der Zutrittskontrolle (4) zur Aufstiegshilfe (2) befindet.

4. Einrichtung nach Anspruch 1, **dadurch gekennzeichnet, daß** sich die erste Station (5) zur Bestellungsaufgabe nach der Zutrittskontrolle (4) zur Aufstiegshilfe (2) befindet.

5. Einrichtung nach Anspruch 4, **dadurch gekennzeichnet, daß** sich die erste Station (5) zur Bestellungsaufgabe vor dem Einstiegsbereich (A) für die Transportelemente (3) der Aufstiegshilfe (2) befindet.

6. Einrichtung nach Anspruch 4, **dadurch gekennzeichnet, daß** sich die erste Station (5) zur Bestellungsaufgabe im Einstiegsbereich (A) für die Transportelemente (3) der Aufstiegshilfe (2) befindet.

7. Einrichtung nach Anspruch 4, **dadurch gekennzeichnet, daß** sich die erste Station (5) zur Bestellungsaufgabe im Transportelement (3) der Aufstiegshilfe (2) befindet.

8. Einrichtung nach einem der Ansprüche 1 bis 5, **dadurch gekennzeichnet, daß** sich die zweite Station (7) zur Ausgabe der Speisen und/oder Getränke vor dem Einstiegsbereich (A) für die Transportelemente (3) der Aufstiegshilfe (2) befindet.

9. Einrichtung nach einem der Ansprüche 1 bis 5, **dadurch gekennzeichnet, daß** sich die zweite Station (7) zur Ausgabe der Speisen und/oder Getränke im Einstiegsbereich (A) für die Transportelemente (3) der Aufstiegshilfe (2) befindet.

10. Einrichtung nach einem der Ansprüche 1 bis 6, **dadurch gekennzeichnet, daß** sich die zweite Station (7) nach dem Einstiegsbereich (A) für die Transportelemente (3) der Aufstiegshilfe (2) befindet.

11. Einrichtung nach einem der Ansprüche 1 bis 10, **dadurch gekennzeichnet, daß** sich die erste Station (5) zur Aufgabe der Bestellung und die zweite Station (7) zur Ausgabe der Speisen und/oder Getränke im Bereich einer Station (1,8,9) der Aufstiegshilfe (2) befinden.

12. Einrichtung nach einem der Ansprüche 1 bis 10, **dadurch gekennzeichnet, daß** sich die erste Station (5) zur Aufgabe der Bestellung und die zweite Station (7) zur Ausgabe der Speisen und/oder Getränke in gesonderten Stationen (1,8,9) der Aufstiegshilfe (2) befinden.

13. Einrichtung nach Anspruch 12, **dadurch gekennzeichnet, daß** sich die zweite Station (7) zur Ausgabe der Speisen und/oder Getränke in einer für den Einstieg in die Transportelemente (3) der Aufstiegshilfe (2) nicht ausgebildeten Station (8) der Aufstiegshilfe (2) befindet.

14. Einrichtung nach einem der vorherigen Ansprüche, **dadurch gekennzeichnet, daß** die Transportelemente (3) vom Förderseil entkuppelbare Seilklemmen aufweisen und insbesondere im Ausgabebereich (B) der zweiten Station (7) zur Ausgabe der Speisen und/oder Getränke in entkuppeltem Zustand langsam fahren oder stehen.

15. Einrichtung nach einem der vorherigen Ansprüche, **dadurch gekennzeichnet, daß** zumindest ein Teil der Speisen und/oder Getränke zubereitet und im Ausgabebereich (B) der zweiten Station (7) zur Ausgabe der Speisen und/oder Getränke ausgegeben wird.

16. Einrichtung nach Anspruch 15, **dadurch gekennzeichnet, daß** sie eine gesonderte dritte Station zur Zubereitung der Speisen und/oder Getränke aufweist.

17. Einrichtung nach einem der vorherigen Ansprüche, **dadurch gekennzeichnet, daß** sie eine Zahleinrichtung aufweist.

18. Einrichtung nach Anspruch 17, **dadurch gekennzeichnet, daß** die Zahleinrichtung zum bargeldlosen Zahlungsverkehr ausgebildet ist.
